# EUROPEAN PATENT SPECIFICATION

(11) **EP 3 674 879 B1**
(45) Date of publication and mention of the grant of the patent: **22.11.2023**
(21) Application number: 19219598.0
(22) Date of filing: 24.12.2019
(51) Int. Cl.: G06F 3/12

(54) **PRINTING SYSTEM, PRINTING APPARATUS, AND METHOD FOR CONTROLLING PRINTING SYSTEM**
DRUCKSYSTEM, DRUCKVORRICHTUNG UND VERFAHREN ZUM STEUERN EINES DRUCKSYSTEMS
SYSTÈME D'IMPRESSION, APPAREIL D'IMPRESSION ET PROCÉDÉ DE COMMANDE D'UN SYSTÈME D'IMPRESSION

(30) Priority: 26.12.2018 JP 2018242246
(43) Date of publication of application: 01.07.2020
(73) Proprietor: Seiko Epson Corporation, Tokyo 160-8801 (JP)
(72) Inventor: YOKOYAMA, Yasufumi, Suwa-shi, Nagano 392-8502 (JP)
(74) Representative: Lewis Silkin LLP

(56) References cited:
- US-A1- 2008 112 006
- US-A1- 2009 116 061
- US-A1- 2016 042 574

## Description

### BACKGROUND

### 1. Technical Field

The present disclosure relates to a printing system and a method for controlling the printing system.

### 2. Related Art

A technology for controlling a connection apparatus coupled to an apparatus is known. For example, JP A-2012-203461 discloses an information processing apparatus that obtains, from a scanning apparatus that the information processing apparatus is coupled to, a plurality of control programs prepared individually for a plurality of operating systems and that causes the scanning apparatus coupled to the information processing apparatus to perform processing in accordance with a particular control program corresponding to the operating system of the information processing apparatus per se.

One example of a connection apparatus similar to the scanning apparatus described in JP A-2012-203461 is a storage apparatus that can be coupled to a printing apparatus. The storage apparatus of this kind performs processing relating to transaction under the control performed through the use of the printing apparatus. However, when this storage apparatus is configured, as described in JP A-2012-203461, to record control programs corresponding to operating systems, an apparatus that controls the storage apparatus cannot, depending on the operating system of the apparatus per se, cause the storage apparatus to perform processing relating to transaction in some cases.

US 2016/042574 discloses, to prevent forgery of printouts, a printer that prints a receipt based on print data sent from a POS terminal. The printer has: a code generating unit that generates a unique code unique to each receipt based on the print data, a print control unit and print unit that print a receipt based on the print data, and print the unique code on the receipt, and a code transmission unit that outputs the unique code to a receipt history server.

US 2008/112006 and US 2009/116061 are also relevant.

### SUMMARY

An aspect of the invention for solving the problem described above is a printing system as defined in claim 1.

A further aspect of the invention for solving the problem described above is a method for controlling a printing system as defined in claim 6.

### BRIEF DESCRIPTION OF THE DRAWINGS

FIG. 1 illustrates a configuration of a printer, a point of sale (POS) terminal, and a TSE (Technische Sicherheitseinrichtung (in German)) memory card.
FIG. 2 illustrates functional blocks of a printing apparatus control section.
FIG. 3 illustrates a data structure of a storage apparatus control command.
FIG. 4 is a sequence diagram illustrating an operation of a POS system.
FIG. 5 illustrates an example of transaction related information.
FIG. 6 is a sequence diagram illustrating an operation of the POS system.

### DESCRIPTION OF EXEMPLARY EMBODIMENTS

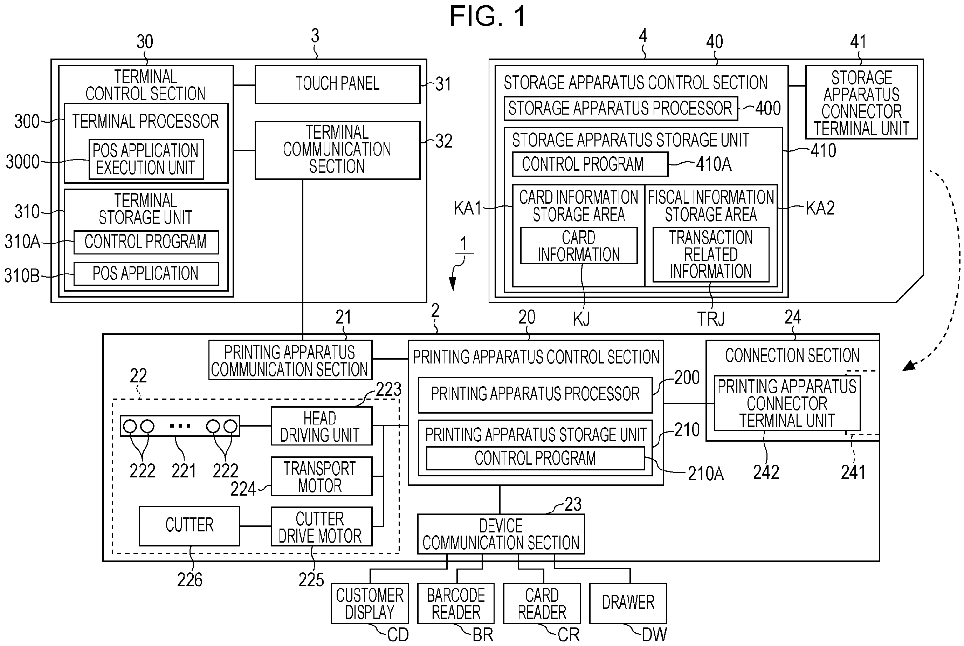

FIG. 1 illustrates a configuration of a printer 2, a point of sale (POS) terminal 3, and a TSE (Technische Sicherheitseinrichtung (in German)) memory card 4. The printer 2 corresponds to an example of a printing apparatus. The POS terminal 3 corresponds to an example of a terminal apparatus. The TSE memory card 4 corresponds to an example of a storage apparatus.

As illustrated in FIG. 1, a POS system 1 involves the printer 2, the POS terminal 3, and the TSE memory card 4. The POS system 1 corresponds to an example of a printing system. The POS system 1 is used in businesses such as retail business including shopping malls, convenience stores, and on-board retail and restaurant business including restaurants, cafes, and pubs. The POS system 1 has, for example, a functionality of performing the accounting process according to a product purchased by a customer and a functionality of issuing a receipt in accordance with the accounting process. The receipt corresponds to an example of a voucher.

Firstly, a configuration of the POS terminal 3 is described.

The POS terminal 3 is, for example, a tablet terminal apparatus in which a touch panel 31 is provided at a wide area of the front face of the tablet terminal apparatus. The POS terminal 3 may be a stationary terminal, such as a desktop-type terminal. The POS terminal 3 functions as a host computer that performs various kinds of processing relating to accounting and controls the printer 2 at the point of sale for customers.

The POS terminal 3 includes a terminal control section 30, the touch panel 31, and a terminal communication section 32.

The terminal control section 30 includes a terminal processor 300 that is a processor for running programs, such as a central processing unit (CPU) or a microprocessor unit (MPU), and a terminal storage unit 310. The terminal control section 30 controls the individual units of the POS terminal 3. The terminal control section 30 performs various kinds of processing with the use of hardware and software cooperating with each other such that the terminal processor 300 performs processing by reading a control program 310A recorded in the terminal storage unit 310. A POS application 310B is preinstalled in the POS terminal 3. The POS application 310B is an application program that causes the terminal processor 300 to function as a POS application execution unit 3000. The terminal processor 300 functions as the POS application execution unit 3000 by running the POS application 310B that is read from the terminal storage unit 310. As will be described in detail below, the POS application execution unit 3000 has a function of generating and outputting a storage apparatus control command KCD. The storage apparatus control command KCD corresponds to an example of a control command.

The terminal storage unit 310 has a storage area for recording programs that are run by the terminal processor 300 and data that is processed by the terminal processor 300. The terminal storage unit 310 records the control program 310A that is run by the terminal processor 300 and other various kinds of data. The terminal storage unit 310 has a non-volatile storage area for recording programs and data in a non-volatile manner. The terminal storage unit 310 may have a volatile storage area that forms a work area for temporarily recording programs that are run by the terminal processor 300 and data targeted for processing.

The touch panel 31 includes a display panel, such as liquid crystal display panel, and a touch sensor that is layered on or formed integrally with the display panel. The display panel displays various images under the control of the terminal control section 30. The touch sensor detects touch inputs and outputs the detected touch inputs to the terminal control section 30. The terminal control section 30 performs processing responding to the touch input in accordance with the touch input that is entered via the touch sensor.

The terminal communication section 32 is constituted by communication hardware compliant with a given communication standard and communicates with the printer 2 under the control of the terminal control section 30. A communication circuit, a communication port, a communication substrate, a communication connector are examples of the communication hardware. The communication standard employed between the terminal communication section 32 and the printer 2 may be a standard relating to wired communication or a standard relating to wireless communication. Serial communication standards, such as Universal Serial Bus (USB) and RC232C, parallel communication standards, such as IEEE1284, and Ethernet are examples of the standard relating to wired communication. Ethernet is a registered trademark. Communication standards relating to a wireless local area network (LAN), such as Wi-Fi, and communication standards relating to short-distance wireless communication, such as Bluetooth, are examples of the standard relating to wireless communication. Wi-Fi is a registered trademark. Bluetooth is also a registered trademark.

Next, a configuration of the printer 2 is described.

The printer 2 is a thermal printer in which roll paper is set as a print medium and characters and/or images are printed on the roll paper by forming dots on the roll paper with the use of a line-type thermal head 221. While the printing method of the printer 2 according to this embodiment is a thermal method, the printing method of the printer 2 is not limited to the thermal method and may be another printing method such as an inkjet method. The print head of the printer 2 is not limited to line-type but may be serial-type.

The printer 2 includes a printing apparatus control section 20, a printing apparatus communication section 21, a printing section 22, a device communication section 23, and a connection section 24.

The printing apparatus control section 20 includes a printing apparatus processor 200 that is a processor for running programs, such as a CPU or an MPU, and a printing apparatus storage unit 210. The printing apparatus control section 20 controls the individual units of the printer 2. The printing apparatus control section 20 performs various kinds of processing with the use of hardware and software cooperating with each other such that the printing apparatus processor 200 performs processing by reading a control program 210A recorded in the printing apparatus storage unit 210.

The printing apparatus storage unit 210 has a storage area for recording programs that are run by the printing apparatus processor 200 and data that is processed by the printing apparatus processor 200. The printing apparatus storage unit 210 records the control program 210A that is run by the printing apparatus processor 200 and other various kinds of data. The printing apparatus storage unit 210 has a non-volatile storage area for recording programs and data in a non-volatile manner. The printing apparatus storage unit 210 may have a volatile storage area that forms a work area for temporarily recording programs that are run by the printing apparatus processor 200 and data targeted for processing.

The printing section 22 prints in accordance with a print command received from the POS terminal 3 under the control of the printing apparatus control section 20. The print command is a command for ordering printing characters and/or images on roll paper and includes, for example, character codes and a command for printing in accordance with the character codes. The print command received from the POS terminal 3 is a command of a particular command system to which the printer 2 responds.

The printing section 22 includes the thermal head 221, a head driving unit 223, a transport motor 224, a cutter driving motor 225, and a cutter 226.

The thermal head 221 has a plurality of heater elements 222 that are each formed of a resistive body and that are aligned in a direction transverse to the transport direction of roll paper. An example of the direction transverse to the transport direction is a direction perpendicular to the transport direction. The thermal head 221 heats the heater elements 222 by electrically energizing the heater elements 222 and applies heat on the printing surface of roll paper, and as a result, characters and/or images are printed.

The head driving unit 223 includes hardware such as a circuit that is necessary for driving the thermal head 221. The head driving unit 223 controls electrical energization with respect to the heater elements 222 of the thermal head 221 under the control of the printing apparatus control section 20.

Under the control of the printing apparatus control section 20, the transport motor 224 rotates a transport roller and transports roll paper in the transport direction.

The cutter driving motor 225 drives a movable blade constituting the cutter 226 to slide the movable blade toward a fixed blade and thus cuts roll paper under the control of the printing apparatus control section 20.

The device communication section 23 includes an interface board having a port compliant with a USB standard, a port compliant with a serial communication standard other than USB standards, a port compliant with a parallel communication standard, a port compliant with a communication standard relating to wired LANs, and another kind of port. Devices can be coupled to the ports. The device communication section 23 communicates with devices coupled to the printer 2 via ports under the control of the printing apparatus control section 20. The device communication section 23 may have a function of wireless communication and wirelessly communicate with devices.

A customer display CD, a barcode reader BR, a card reader CR, and a drawer DW are coupled to the printer 2 of this embodiment as the devices.

The customer display CD displays information regarding accounting under the control of the printing apparatus control section 20. Customers making payment at a cashier counter can view the information displayed on the customer display CD.

The barcode reader BR reads a bar code attached to a product or the package of a product and outputs to the device communication section 23 read information indicating the result that has been read. The device communication section 23 in turn outputs to the printing apparatus control section 20 the read information that has been input from the barcode reader BR.

The card reader CR magnetically reads information recorded in a storage medium formed as a magnetic card, such as a credit card or a membership card, and outputs to the device communication section 23 read information indicating the result that has been read. The device communication section 23 in turn outputs to the printing apparatus control section 20 the read information that has been input from the card reader CR.

The drawer DW is a structure including a tray for storing cash or the like and a mechanism that enables the tray to be pulled out from the main body of the drawer DW. The device communication section 23 includes a connector compliant with, for example, a registered jack (RJ) standard. The device communication section 23 is coupled to the drawer DW via a cable and outputs control signals to the drawer DW.

The connection section 24 includes a slot 241 that is formed at a housing of the printer 2 and into or from which a memory card can be inserted or removed with respect to the printer 2. A memory card is inserted into the slot 241, so that the connection section 24 is coupled to the memory card. The connection section 24 includes a printing apparatus connector terminal unit 242 that has a connector terminal for establishing communication in contact with a memory card inserted in the slot 241 and that receives or transmits data from or to the TSE memory card 4 inserted into the slot 241.

While this embodiment indicates the case in which the TSE memory card 4 is inserted into the slot 241 and thus the TSE memory card 4 and the connection section 24 are coupled to each other, the connection section 24 is configured to enable another memory card to be inserted into or removed from the connection section 24. The other memory card is formed in the same shape as that of the TSE memory card 4 and that is other than the TSE memory card 4.

Next, a configuration of the TSE memory card 4 is described.

The TSE memory card 4 is a memory card simply called TSE and records information by employing a write once read many (WORM) method. The shape of the TSE memory card may be the shape of secure digital (SD) memory card or the shape of micro SD card. Since the memory card 4 of this embodiment records information by employing the WORM method, the information recorded in the TSE memory card 4 cannot be deleted or falsified.

In this embodiment, the TSE memory card 4 records, as fiscal information, transaction related information TRJ containing transaction information TJ regarding transaction that is done at a retail establishment or the like at which products are sold. The fiscal information is, for example, information referred to by a national authority, such as a government, to grasp the actual details of transaction made at a retail establishment when the national authority is to collect tax from the retail establishment. There is thus a need for preventing the transaction related information TRJ recorded as the fiscal information from being deleted or falsified. Since the transaction related information TRJ recorded as the fiscal information is stored in the TSE memory card 4 by employing the WORM method, deletion or falsification of the transaction related information TRJ can be prevented.

The TSE memory card 4 includes a storage apparatus control section 40 and a storage apparatus connector terminal unit 41.

The storage apparatus control section 40 includes a storage apparatus processor 400 that is a processor for running programs, such as a CPU, and a storage apparatus storage unit 410. The storage apparatus control section 40 controls the individual units of the TSE memory card 4. The storage apparatus control section 40 performs various kinds of processing with the use of hardware and software cooperating with each other such that the storage apparatus processor 400 performs processing by reading a control program 410A recorded in the storage apparatus storage unit 410.

The storage apparatus storage unit 410 has a storage area for recording the control program 410A that is run by the storage apparatus processor 400 and data that is processed by the storage apparatus processor 400. The printing apparatus storage unit 210 has a non-volatile storage area for recording programs and data in a non-volatile manner.

The storage area included in the storage apparatus storage unit 410 involves a card information storage area KA1 and a fiscal information storage area KA2. The card information storage area KA1 records card information KJ about the TSE memory card 4 such as the type of memory card, the storage capacity, the reading speed, and the writing speed. The fiscal information storage area KA2 records the transaction related information TRJ. The storage apparatus storage unit 410 may have a volatile storage area that forms a work area for temporarily recording programs that are run by the storage apparatus processor 400 and data targeted for processing.

The storage apparatus connector terminal unit 41 includes a connector terminal for establishing communication in contact with the connector terminal included in the printing apparatus connector unit 242 when the storage apparatus connector unit 41 is coupled to the connection section 24 of the printer 2. The storage apparatus connector terminal unit 41 receives or sends data through communication in contact with the printer 2 in the state in which the TSE memory card 4 is inserted into the slot 241.

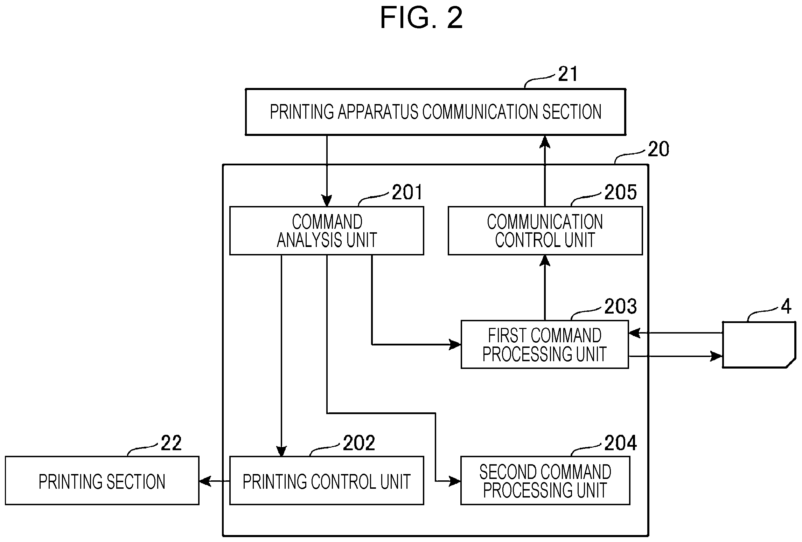

FIG. 2 illustrates a functional configuration of the printing apparatus control section 20. For ease of understanding, FIG. 2 also illustrates the printing apparatus communication section 21, the printing section 22, and the TSE memory card 4.

As illustrated in FIG. 2, the printing apparatus control section 20 includes, as functional blocks, a command analysis unit 201, a printing control unit 202, a first command processing unit 203, a second command processing unit 204, and a communication control unit 205. These functional blocks are functional units implemented by running the control program 210A with the use of the printing apparatus processor 200.

The command analysis unit 201 analyzes commands received by the printing apparatus communication section 21. The command analysis unit 201 determines whether a received command is the print command, the storage apparatus control command KCD described later, or a command other than the print command and the storage apparatus control command KCD. Determination of the type of command is performed in accordance with, for example, an instruction code. When the command received by the printing apparatus communication section 21 is the print command, the command analysis unit 201 outputs the print command to the printing control unit 202. When the command received by the printing apparatus communication section 21 is the storage apparatus control command KCD, the command analysis unit 201 outputs the storage apparatus control command KCD to the first command processing unit 203. When the command received by the printing apparatus communication section 21 is a command other than the print command and the storage apparatus control command KCD, the command analysis unit 201 outputs the command to the second command processing unit 204.

Here, the storage apparatus control command KCD is described.

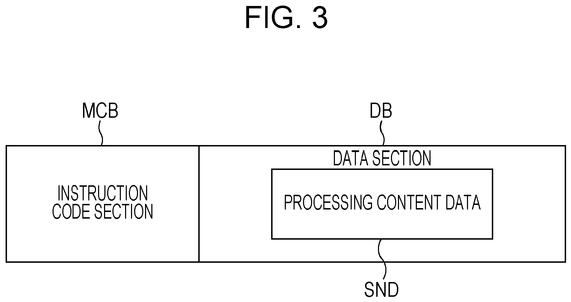

FIG. 3 schematically illustrates a data structure of the storage apparatus control command KCD.

The storage apparatus control command KCD is a command for instructing an external device to perform processing for the storage apparatus coupled to the external device; in this embodiment, the storage apparatus control command KCD is a command for instructing the printer 2 to perform processing for the TSE memory card 4 coupled to the printer 2. The storage apparatus control command KCD includes at least an instruction code section MCB and a data section DB.

The instruction code section MCB stores an instruction code especially for the storage apparatus control command KCD.

The data section DB stores data of a given format. In this embodiment, the data section DB stores data of JavaScript Object Notation (JSON) format. The data section DB stores data of JSON format containing processing content data SND indicating details of processing for the TSE memory card 4. JavaScript is a registered trademark.

Referring to FIG. 2, in accordance with the print command received by the printing apparatus communication section 21, the printing control unit 202 controls the printing section 22 to print on roll paper. When the print command is a command relating to issuing a receipt, the printing control unit 202 controls the printing section 22 to issue a receipt. The issuing a receipt is an example of printing a voucher.

The first command processing unit 203 performs processing in accordance with the storage apparatus control command KCD received by the printing apparatus communication section 21. The first command processing unit 203 generates a command for instructing the TSE memory card 4 coupled to the connection section 24 to perform processing in accordance with the processing content data SND stored in the data section DB of the storage apparatus control command KCD. In the following description, the command that is generated in accordance with the storage apparatus control command KCD and that is for instructing the TSE memory card 4 to perform processing is referred to as a "processing instruction command". The control program 210A recorded in the printing apparatus storage unit 210 of the printer 2 contains in advance a program for implementing a function of generating the processing instruction command that the TSE memory card 4 can process. After the first command processing unit 203 generates the processing instruction command, the first command processing unit 203 outputs the generated processing instruction command to the TSE memory card 4 via the connection section 24.

For example, it is assumed that the data section DB of the storage apparatus control command KCD received from the POS terminal 3 stores the processing content data SND indicating accessing the TSE memory card 4. Accessing the TSE memory card 4 denotes writing or reading information to or from the TSE memory card 4. In this case, the first command processing unit 203 generates, as the processing instruction command, a recording command for ordering recording information. The first command processing unit 203 then outputs, as the processing instruction command, the recording command to the TSE memory card 4 via the connection section 24.

After receiving response data responsive to the processing instruction command from the TSE memory card 4, the first command processing unit 203 generates response data for the storage apparatus control command KCD in accordance with the received response data. The first command processing unit 203 then outputs the generated response data to the communication control unit 205.

The communication control unit 205 sends to the POS terminal 3 via the printing apparatus communication section 21 the response data for the storage apparatus control command KCD that is input from the first command processing unit 203.

The second command processing unit 204 performs processing in accordance with a command other than the print command and the storage apparatus control command KCD among commands received by the printing apparatus communication section 21. An example of the command other than the print command and the storage apparatus control command KCD is a command for controlling a device coupled to the printer 2.

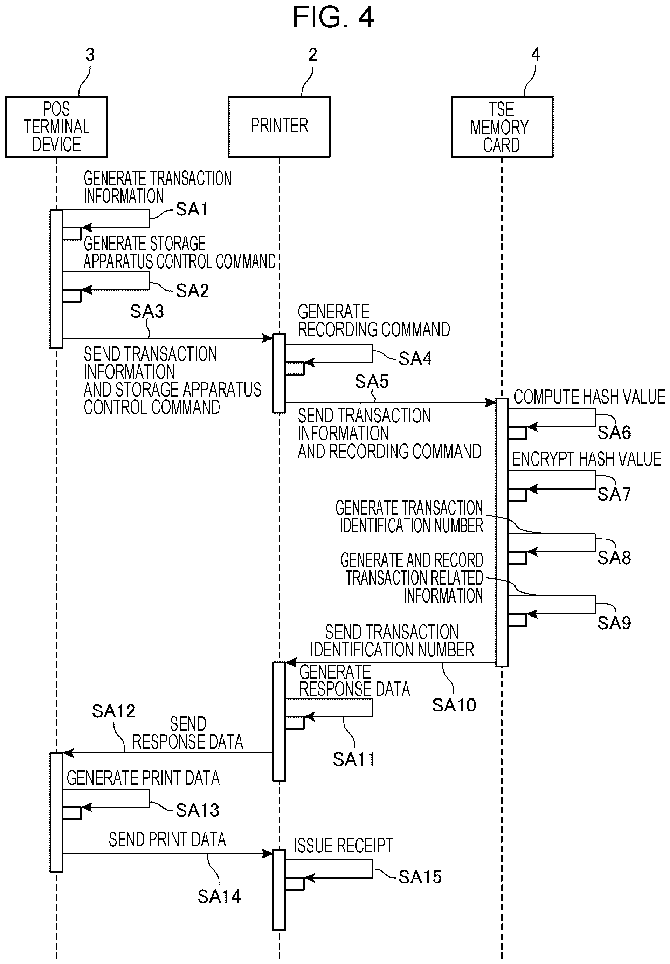

Next, operations of the POS terminal 3, the printer 2, and the TSE memory card 4 are described. FIG. 4 is a sequence diagram indicating operations of the POS terminal 3, the printer 2, and the TSE memory card 4.

In the description with reference to FIG. 4, it is assumed that the TSE memory card 4 is coupled to the connection section 24 of the printer 2. The description with reference to FIG. 4 uses the case in which transaction regarding a product is carried out at a point of sale in a retail establishment. In addition, in the description with reference to FIG. 4, it is assumed that the printer 2 is in a normal operation state in which the printing section 22 can print in accordance with the print command.

The POS application execution unit 3000 of the terminal control section 30 of the POS terminal 3 performs accounting processing in accordance with payment of a customer and generates the transaction information TJ regarding transaction relating to the payment in accordance with the performed accounting processing (step SA1).

Specifically describing the processing in SA1, the POS application execution unit 3000 causes the touch panel 31 to display a user interface via which data regarding accounting can be input. The POS application execution unit 3000 generates the transaction information TJ in accordance with data that is input via the touch panel 31.

The transaction information TJ contains, for example, product information about a product purchased by a customer at the point of sale, information indicating the amount of subtotal, information indicating the amount of tax, information indicating the total amount, information indicating the payment method, information indicating the paid amount, and information indicating the amount of change. The product information contains information indicating the product name, information indicating the price of the product, and information indicating the number of products purchased.

Next, the POS application execution unit 3000 generates the storage apparatus control command KCD for ordering accessing the TSE memory card 4 (step SA2). In step SA2, the POS application execution unit 3000 generates in JSON format the processing content data SND indicating processing of accessing the TSE memory card 4 and stores the generated processing content data SND in the data section DB, and as a result, the storage apparatus control command KCD is generated.

After generating the storage apparatus control command KCD, the POS application execution unit 3000 sends the transaction information TJ and the storage apparatus control command KCD to the printer 2 via the terminal communication section 32 (step SA3).

When receiving the storage apparatus control command KCD from the POS terminal 3 via the printing apparatus communication section 21, the first command processing unit 203 of the printing apparatus control section 20 of the printer 2 generates, as the processing instruction command, the recording command for ordering recording information (step SA4).

After generating the recording command, the first command processing unit 203 outputs to the TSE memory card 4 via the connection section 24 the generated recording command and the transaction information TJ received from the POS terminal 3 (step SA5).

When the transaction information TJ and the recording command are input via the storage apparatus connector terminal unit 41, the storage apparatus control section 40 of the TSE memory card 4 computes a hash value in accordance with the transaction information TJ by using a given hash function (step SA6). The hash value corresponds to an example of intermediate data.

Next, the storage apparatus control section 40 encrypts the computed hash value by using a secret key (step SA7). The secret key is a cryptographic key conforming to a public-key cryptography method. The secret key is preregistered in the TSE memory card 4 and recorded in a predetermined storage area of the storage apparatus storage unit 410. In the following description, the hash value encrypted by using the secret key is referred to as a signature value ST. The signature value ST can be decrypted by using a public key corresponding to the secret key used for encryption. The public key is a decryption key conforming to the public-key cryptography method. The public key is stored in a predetermined storage area of a device in which the signature value ST is decrypted.

Subsequently, after generating the signature value ST, the storage apparatus control section 40 generates, by using a given method, a transaction identification number TSB for uniquely identifying the transaction information TJ received from the printer 2 (step SA8). The transaction identification number TSB corresponds to an example of identification information.

Next, the storage apparatus control section 40 generates the transaction related information TRJ and records the generated transaction related information TRJ as the fiscal information in the fiscal information storage area KA2 of the storage apparatus storage unit 410 (step SA9).

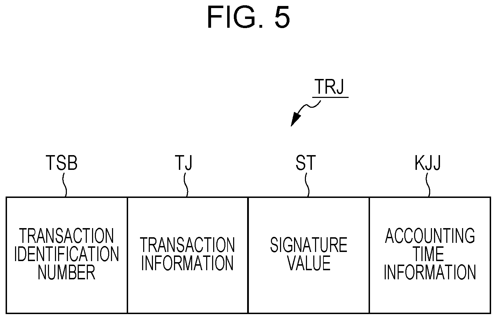

FIG. 5 illustrates an example of the transaction related information TRJ.

As illustrated in FIG. 5, the transaction related information TRJ is information in which the transaction identification number TSB, the transaction information TJ, the signature value ST, and accounting time information KJJ are associated with each other.

The storage apparatus control section 40 generates the transaction related information TRJ by associating the transaction information TJ received from the printer 2, the signature value ST generated in step SA7, the transaction identification number TSB generated in step SA8, and the accounting time information KJJ indicating the accounting time with each other. When the transaction information TJ contains the accounting time information KJJ, the storage apparatus control section 40 may obtain the accounting time information KJJ from the transaction information TJ. When the storage apparatus control section 40 receives the accounting time information KJJ together with the transaction information TJ from the POS terminal 3 via the printer 2, the storage apparatus control section 40 may generate the transaction related information TRJ in accordance with the received accounting time information KJJ. The accounting time is, for example, a time when payment is completed.

As described above, the TSE memory card 4 generates the transaction identification number TSB for uniquely identifying the received transaction information TJ. This configuration achieves effects described below.

As described above, the TSE memory card 4 records, as the fiscal information, the transaction related information TRJ containing the transaction information TJ. The fiscal information is, for example, information referred to by a national authority, such as a government, to grasp the actual details of transactions made at a retail establishment when the national authority is to collect tax from the retail establishment. As a result, the transaction identification number TSB assigned to the transaction related information TRJ recorded as the fiscal information needs to be different from the transaction identification number TSB assigned to other transaction information TJ. Here, a configuration in which the POS terminal 3 generates the transaction identification number TSB can be considered. However, with this configuration, when a plurality of the POS terminal apparatuses 3 communicate with the printer 2, the plurality of the POS terminal apparatuses 3 each generate the transaction identification number TSB, and as a result, the TSE memory card 4 may record different items of the transaction information TJ assigned the same transaction identification number TSB. This configuration hinders appropriate management of the transaction related information TRJ as the fiscal information with the use of the TSE memory card 4. Since the TSE memory card 4 generates the transaction identification number TSB, when a plurality of the POS terminal apparatuses 3 communicate with the printer 2, the TSE memory card 4 can assign the transaction identification number TSB unique to a particular item of the transaction information TJ. As a result, the TSE memory card 4 can appropriately manage the transaction related information TRJ as the fiscal information.

The TSE memory card 4 records the transaction related information TRJ in which the signature value ST, the transaction identification number TSB, and the transaction information TJ are associated with each other.

The signature value ST is used by, for example, an inspector such as a national authority who examines the fiscal information to grasp the actual details of transaction for the purpose of judging the legitimacy of the transaction information TJ recorded in the TSE memory card 4. The inspector judges the legitimacy of the transaction information TJ by using an inspection device that manages a hash function used when the TSE memory card 4 generates the signature value ST and a public key corresponding to a secret key used for encrypting a hash value. At the time of judgement, the inspection device reads the transaction information TJ from the TSE memory card 4 by employing a predetermined method; but when the signature value ST is not associated with the transaction information TJ, it is difficult to judge the legitimacy of the transaction information TJ targeted for inspection. The TSE memory card 4 thus records the transaction related information TRJ in which the transaction information TJ and the signature value ST are associated with each other. With this configuration, the TSE memory card 4 can manage the transaction information TJ in a manner that facilitates the judgement with the use of the signature value ST.

Furthermore, for example, when the inspector who examines the fiscal information reads the transaction information TJ from the TSE memory card 4 by using the inspection device, in the case in which the transaction information TJ cannot be identified, a particular item of the transaction information TJ may be referred to many times. In this case, at the time of examining the fiscal information and grasping the actual details of transaction, the fiscal information is not necessarily referred to appropriately. The TSE memory card 4 thus records the transaction related information TRJ in which the transaction information TJ and the transaction identification number TSB are associated with each other. With this configuration, the TSE memory card 4 can manage the transaction information TJ in a manner that enables identifying the transaction information TJ.

As described above, the TSE memory card 4 records the transaction related information TRJ in which the signature value ST, the transaction identification number TSB, and the transaction information TJ are associated with each other, and as a result, the transaction information TJ can be managed in a manner appropriate for using the transaction information TJ.

Referring to FIG. 4, the storage apparatus control section 40 records the transaction related information TRJ in the fiscal information storage area KA2 of the storage apparatus storage unit 410 and outputs, as response data for the recording command, the transaction identification number TSB to the printer 2 via the storage apparatus connector terminal unit 41 (step SA10).

When the transaction identification number TSB is input via the connection section 24, the printing apparatus control section 20 of the printer 2 generates response data for the storage apparatus control command KCD in accordance with the input transaction identification number TSB (step SA11).

The response data generated in step SA11 is data of JSON format and contains at least the transaction identification number TSB that is input from the TSE memory card 4.

After generating the response data, the printing apparatus control section 20 sends the generated response data to the POS terminal 3 via the printing apparatus communication section 21 (step SA12).

As described above, the POS terminal 3 sends to the printer 2 the storage apparatus control command KCD for ordering accessing the TSE memory card 4, together with the transaction information TJ. The printer 2 outputs the transaction information TJ to the TSE memory card 4 in accordance with the received storage apparatus control command KCD. The TSE memory card 4 generates the transaction identification number TSB in accordance with the input transaction information TJ and records the transaction information TJ and the transaction identification number TSB in the storage apparatus storage unit 410. The TSE memory card 4 subsequently sends the transaction identification number TSB to the printer 2. The printer 2 sends to the POS terminal 3 via the printing apparatus communication section 21 the transaction identification number TSB that is output by the TSE memory card 4.

As described above, in the POS system 1, the POS terminal 3 sends the storage apparatus control command KCD to the printer 2, and as a result, the POS terminal 3 can cause, by using the printer 2, the TSE memory card 4 coupled to the printer 2 to record the transaction information TJ and output the transaction identification number TSB. This means that the POS terminal 3 can cause, by using the storage apparatus control command KCD, the TSE memory card 4 coupled to the printer 2 to perform processing relating to transaction. Thus, in the POS system 1, the POS terminal 3 only needs to be a terminal apparatus into which the POS application 310B can be installed. As a result, the POS system 1 can ease the limitation to properties of the POS terminal 3 with respect to control of the TSE memory card 4. For example, without depending on properties of the POS terminal 3 such as a property regarding the operating system, the POS system 1 can cause, by using various kinds of the POS terminal 3, the TSE memory card 4 coupled to the printer 2 to perform processing relating to transaction.

In accordance with the storage apparatus control command KCD, the printer 2 generates, as the processing instruction command, the recording command for instructing the TSE memory card 4 to record information and outputs the generated recording command and the transaction information TJ to the TSE memory card 4 via the connection section 24. The TSE memory card 4 records the transaction information TJ and the transaction identification number TSB in accordance with the input recording command.

As described above, in the POS system 1, the POS terminal 3 sends the storage apparatus control command KCD to the printer 2, and as a result, the TSE memory card 4 coupled to the printer 2 is caused to record the transaction information TJ and the transaction identification number TSB. Moreover, the printer 2 generates a command that can be processed by the TSE memory card 4 in accordance with the storage apparatus control command KCD, and thus, the POS terminal 3 can definitely cause, by using the storage apparatus control command KCD, the TSE memory card 4 to record information. As a result, the POS system 1 can ease the limitation to properties of the POS terminal 3 when the TSE memory card 4 is caused to record information regarding transaction, and therefore, various kinds of the POS terminal 3 can cause the TSE memory card 4 coupled to the printer 2 to record information regarding transaction.

Moving back to the description of the sequence diagram in FIG. 4, when receiving the response data via the terminal communication section 32, the POS application execution unit 3000 of the terminal control section 30 of the POS terminal 3 generates print data based on the transaction identification number TSB included in the response data (step SA13).

The print data generated in step SA12 contains the print command, the transaction information TJ, and the transaction identification number TSB. The print command contains a line break command, a cutter command, and a printing instruction command for ordering printing the transaction information TJ and the transaction identification numberTSB at a given position in a given form.

After generating the print data, the POS application execution unit 3000 sends the generated print data to the printer 2 via the terminal communication section 32 (step SA14).

The printing control unit 202 of the printing apparatus control section 20 of the printer 2 executes the print command in accordance with the received print data and issues a receipt on which the transaction information TJ and the transaction identification number TSB are printed at a given position in a given form (step SA15).

As described above, when the POS terminal 3 receives the transaction identification number TSB from the printer 2 by using the terminal communication section 32, the POS terminal 3 sends to the printer 2 via the terminal communication section 32 the print command for ordering printing, the transaction information TJ, and the transaction identification number TSB. After the printer 2 receives the print command, the transaction information TJ, and the transaction identification number TSB, the printer 2 issues, by using the printing section 22, a receipt on which the transaction information TJ and the transaction identification number TSB are printed in accordance with the print command.

With this configuration, the POS system 1 issues a receipt on which the transaction identification number TSB generated by the TSE memory card 4 is printed, and thus, when the printer 2 communicates with a plurality of the POS terminal apparatuses 3, the printer 2 can issue a receipt on which the transaction identification number TSB uniquely assigned to the particular receipt is printed.

In the description with reference to FIG. 4, the case in which the operation state is the normal operation state is used for explaining the operation of the printer 2. However, the POS terminal 3 can cause the TSE memory card 4 to perform processing by using the storage apparatus control command KCD when the operation state of the printer 2 is an offline state in which the printing section 22 does not print in accordance with the print command. Examples of the offline state include the state in which roll paper is running out and the state in which a cover for covering a housing unit that houses roll paper is open. While the printer 2 in the offline state cannot print by using the printing section 22, the printer 2 in the offline state can send and receive information to and from the POS terminal 3 and input and obtain information to and from the TSE memory card 4.

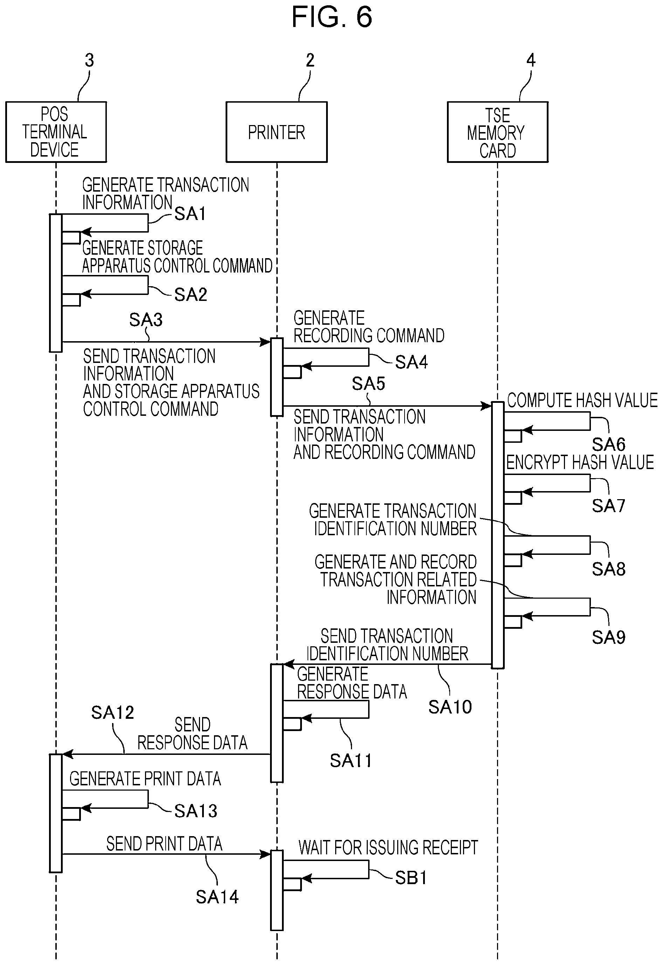

FIG. 6 is a sequence diagram indicating operations of the POS terminal 3, the printer 2, and the TSE memory card 4. In the sequence diagram in FIG. 6, processing operations identical to the processing operations indicated in the sequence diagram in FIG. 4 are assigned the same step characters.

In the description with reference to FIG. 6, it is assumed that the TSE memory card 4 is coupled to the connection section 24 of the printer 2. The description with reference to FIG. 6 uses the case in which transaction regarding a product is carried out at a point of sale in a retail establishment. In addition, in the description with reference to FIG. 6, it is assumed that the operation state of the printer 2 is the offline state.

The POS application execution unit 3000 of the terminal control section 30 of the POS terminal 3 generates the transaction information TJ in accordance with accounting processing (step SA1) and generates the storage apparatus control command KCD (step SA2). The POS application execution unit 3000 then sends the transaction information TJ and the storage apparatus control command KCD to the printer 2 via the terminal communication section 32 (step SA3).

The printer 2 in the offline state can send and receive information to and from the POS terminal 3 and input and obtain information to and from the TSE memory card 4. Thus, the first command processing unit 203 of the printing apparatus control section 20 of the printer 2 generates the recording command in accordance with the storage apparatus control command KCD (step SA4) and outputs the transaction information TJ and the generated recording command to the TSE memory card 4 via the connection section 24 (step SA5).

The storage apparatus control section 40 of the TSE memory card 4 performs the processing operations in steps SA6, SA7, SA8, and SA9 in accordance with the transaction information TJ and the recording command that are output by the printer 2. The storage apparatus control section 40 subsequently outputs the transaction identification number TSB to the printer 2 via the storage apparatus connector terminal unit 41 (step SA10).

The printer 2 in the offline state can send and receive information to and from the POS terminal 3 and input and obtain information to and from the TSE memory card 4. Thus, the first command processing unit 203 of the printing apparatus control section 20 of the printer 2 performs the processing operations in steps SA11 and SA12 in accordance with the transaction identification number TSB that is output by the TSE memory card 4.

After receiving the transaction identification number TSB via the terminal communication section 32, the POS application execution unit 3000 of the terminal control section 30 of the POS terminal 3 generates print data based on the received transaction identification number TSB (step SA13) and sends the print data to the printer 2 (step SA14).

When receiving the print data via the printing apparatus communication section 21, the printing control unit 202 of the printing apparatus control section 20 of the printer 2 waits for printing by using the printing section 22 (step SB1). The received print data is recorded in a given buffer of the printer 2. When it is determined that the operation state is switched from the offline state to the normal operation state, the printing control unit 202 reads the print data recorded in the given buffer and issues a receipt based on the read print data by using the printing section 22.

As described above, when the operation state of the printer 2 is the offline state, the printer 2 does not print in accordance with the print data, while the printer 2 sends and receives information to and from the POS terminal 3 and sends and receives information to and from the TSE memory card 4. Concerning the transaction information TJ recorded as the fiscal information in the TSE memory card 4, a particular condition about writing information may be set by law or the like. The particular condition about writing information is that the transaction information TJ has to be recorded in the TSE memory card 4 within a predetermined period after the completion of accounting processing. This intends to prevent the transaction information TJ from being recorded in the TSE memory card 4 after the transaction information TJ is, for example, falsified after accounting processing. However, at the time of carrying out accounting processing, the operation state of the printer 2 may be in the offline state such as the state in which roll paper is running out or the state in which a cover covering a housing unit that houses roll paper is open. In such a case, if the printer 2 is configured not to exchange information with the POS terminal 3 and the TSE memory card 4, the TSE memory card 4 cannot promptly record information after the accounting processing, and thus, the condition about writing information cannot be satisfied in some cases. In consideration of such a case, in the case in which the printer 2 is in the offline state, when the printer 2 receives the storage apparatus control command KCD from the POS terminal 3, the printer 2 outputs the transaction information TJ to the TSE memory card 4 by using the connection section 24. The printer 2 then sends the transaction identification number TSB to the POS terminal 3. With this configuration, as the case of the fiscal information, in the case in which the condition about writing the transaction information TJ is set, when the printer 2 is in the offline state, the TSE memory card 4 coupled to the printer 2 is caused to promptly record the transaction information TJ for the purpose of satisfying the condition about writing information.

While the TSE memory card 4 of this embodiment is configured to generate the transaction identification number TSB different from the signature value ST and assign the transaction identification number TSB to the transaction information TJ, the TSE memory card 4 may be configured to assign the signature value ST as the transaction identification number TSB to the transaction information TJ. In the case of this configuration, the TSE memory card 4 does not perform the processing operation in step SA8 and records as the fiscal information the transaction related information TRJ in which the transaction information TJ is associated with the signature value ST.

As described above, the POS system 1 includes the printer 2 having the printing section 22, the POS terminal 3 that can communicate with the printer 2, and the TSE memory card 4 that can be coupled to the printer 2. The POS terminal 3 includes the terminal communication section 32 that communicates with the printer 2. The POS terminal 3 sends to the terminal communication section 32 the transaction information TJ regarding transaction and the storage apparatus control command KCD for ordering accessing the TSE memory card 4. The printer 2 includes the printing apparatus communication section 21 that communicates with the POS terminal 3 and the connection section 24 that can be coupled to the TSE memory card 4. The printer 2 outputs the transaction information TJ to the TSE memory card 4 by using the connection section 24 and sends, by using the printing apparatus communication section 21, to the POS terminal 3 the transaction identification number TSB that is output to the connection section 24 by the TSE memory card 4, in accordance with the storage apparatus control command KCD received by using the printing apparatus communication section 21. The TSE memory card 4 generates, in accordance with the transaction information TJ that is output by the printer 2, the transaction identification number TSB for identifying the transaction information TJ, records the transaction identification number TSB and the transaction information TJ, and outputs the transaction identification number TSB to the printer 2.

With this configuration, in the POS system 1, the POS terminal 3 sends the storage apparatus control command KCD to the printer 2, and as a result, the POS terminal 3 can cause, by using the printer 2, the TSE memory card 4 coupled to the printer 2 to record the transaction information TJ and output the transaction identification number TSB. This means that the POS terminal 3 can cause, by sending the storage apparatus control command KCD, the TSE memory card 4 coupled to the printer 2 to perform processing relating to transaction. Thus, in the POS system 1, the POS terminal 3 only needs to be a terminal apparatus into which the POS application 310B can be installed. As a result, the POS system 1 can ease the limitation to properties of the POS terminal 3 with respect to control of the TSE memory card 4. For example, without depending on properties of the POS terminal 3 such as a property regarding the operating system, the POS system 1 can cause, by using various kinds of the POS terminal 3, the TSE memory card 4 coupled to the printer 2 to perform processing relating to transaction.

When the POS terminal 3 receives the transaction identification number TSB from the printer 2 by using the terminal communication section 32, the POS terminal 3 sends, by using the terminal communication section 32, the print command for ordering printing, the transaction information TJ, and the transaction identification number TSB. After the printer 2 receives the print command, the transaction information TJ, and the transaction identification number TSB by using the printing apparatus communication section 21, the printer 2 issues, by using the printing section 22, a receipt on which the transaction information TJ and the transaction identification number TSB are printed.

With this configuration, the POS system 1 prints the transaction identification number TSB generated by the TSE memory card 4, and thus, when the printer 2 communicates with a plurality of the POS terminal apparatuses 3, the printer 2 can issue a receipt on which the transaction identification number TSB uniquely assigned to the particular receipt is printed.

The printer 2 can switch between the normal operation state in which the printing section 22 prints in accordance with the print command and the offline state in which the printing section does not perform any operation in accordance with the print command. When the printer 2 in the offline state receives the storage apparatus control command KCD by using the printing apparatus communication section 21, the printer 2 outputs the transaction information TJ to the TSE memory card 4 by using the connection section 24 and sends, by using the printing apparatus communication section 21, to the POS terminal 3 the transaction identification number TSB that is output by the TSE memory card 4, in accordance with the storage apparatus control command KCD.

With this configuration, when the operation state of the printer 2 is the offline state, the TSE memory card 4 is caused to promptly record the transaction information TJ. Thus, as the case of the fiscal information, in the case in which the condition of the writing period is set, when the printer 2 is in the offline state, the POS system 1 can cause the TSE memory card 4 coupled to the printer 2 to promptly record the transaction information TJ for the purpose of satisfying the condition about writing information.

In accordance with the storage apparatus control command KCD received by using the printing apparatus communication section 21, the printer 2 generates the recording command for instructing the TSE memory card 4 to record information and outputs the recording command and the transaction information TJ from the connection section 24. The TSE memory card 4 generates the transaction identification number TSB based on the transaction information TJ and records the transaction identification number TSB and the transaction information TJ in accordance with the recording command that is output by the printer 2.

With this configuration, in the POS system 1, the POS terminal 3 sends the storage apparatus control command KCD to the printer 2, and as a result, the TSE memory card 4 coupled to the printer 2 is caused to record the transaction information TJ and the transaction identification number TSB. Moreover, the printer 2 generates a command that can be processed by the TSE memory card 4 in accordance with the storage apparatus control command KCD, and thus, the POS terminal 3 can definitely cause, by using the storage apparatus control command KCD, the TSE memory card 4 to record information. As a result, the POS system 1 can ease the limitation to properties of the POS terminal 3 when the TSE memory card 4 is caused to record information regarding transaction, and therefore, various kinds of the POS terminal 3 can cause the TSE memory card 4 coupled to the printer 2 to record information regarding transaction.

The TSE memory card 4 generates a hash value in accordance with the transaction information TJ, encrypts the hash value by using a secret key associated with a public key, and records the encrypted hash value, the transaction identification number TSB, and the transaction information TJ.

With this configuration, the TSE memory card 4 can manage the transaction information TJ in a manner that facilitates determination with the signature value ST and that enables identification, and thus, the TSE memory card 4 can manage the transaction information TJ in a manner appropriate for using the transaction information TJ.

For example, while the embodiment described above uses as an example the connection section 24 having the slot 241 that the TSE memory card 4 can be inserted into and removed from, the connection section 24 may be coupled to a reader/writer that the TSE memory card 4 can be inserted into and removed from; and the connection section 24 can be coupled to the TSE memory card 4 via the reader/writer.

Furthermore, for example, while the embodiment described above uses as an example the storage apparatus control command KCD for ordering accessing the TSE memory card 4, the storage apparatus control command KCD can be configured to order various kinds of processing in accordance with the processing content data SND.

For example, when the processing content data SND represents the processing content indicating formatting the TSE memory card 4, the storage apparatus control command KCD is a command for instructing the printer 2 to format the TSE memory card 4. As described above, the storage apparatus control command KCD can order various kinds of processing in accordance with the processing content data SND stored in the data section DB. The printer 2 generates the processing instruction command corresponding to the processing content represented by the processing content data SND and outputs the processing instruction command to the TSE memory card 4. When the POS terminal 3 can generate the processing content data SND corresponding to the processing content for the TSE memory card 4, the TSE memory card 4 coupled to the printer 2 can be caused to perform various kinds of processing.

Moreover, for example, while the embodiment described above uses the TSE memory card 4 as an example of the storage apparatus that the POS terminal 3 can control by using the storage apparatus control command KCD, the storage apparatus that can be controlled by using the storage apparatus control command KCD is not limited to the TSE memory card 4. When the printer 2 can control a storage apparatus coupled to the printer 2 by interpreting the storage apparatus control command KCD, the POS terminal 3 can control a storage apparatus such as a USB flash drive other than the TSE memory card 4 by using the storage apparatus control command KCD. In the case of this configuration, which is not part of the claimed invention, a particular storage apparatus may be controlled in a manner unique to the particular storage apparatus, the POS terminal 3 needs to recognize the type of the storage apparatus coupled to the printer 2. The POS terminal 3 thus sends to the printer 2 the storage apparatus control command KCD for ordering a request for the status of a storage apparatus coupled to the printer 2. The status includes the type of storage apparatus. The printer 2 interprets the data section DB of the storage apparatus control command KCD, obtains the status from the storage apparatus coupled to the printer 2, sends the obtained status to the POS terminal 3 as response data. With this configuration, the POS terminal 3 can recognize the type of the storage apparatus coupled to the printer 2 in accordance with the received status, the storage apparatus coupled to the printer 2 is caused to perform processing unique to the storage apparatus by using the storage apparatus control command KCD. Here, the printer 2 may be coupled to a plurality of storage apparatuses of different types, it is necessary to determine which storage apparatus is instructed by using the storage apparatus control command KCD received from the POS terminal 3 to perform corresponding processing. The POS terminal 3 thus stores data indicating the type of the storage apparatus targeted for control in the data section DB of the storage apparatus control command KCD. This enables the printer 2 to recognize the storage apparatus targeted for control. As a result, when the printer 2 is coupled to different types of storage apparatuses, the POS terminal 3 accurately causes, by using the storage apparatus control command KCD, the storage apparatus targeted for control to perform processing.

Further, for example, while the embodiment described above uses as an example a receipt provided as a voucher for a customer, the voucher is not limited to the receipt and may be, for example, a daily report sheet indicating daily sales or a check that is used for settlement. Furthermore, while the embodiment described above uses, as an example of the transaction information TJ, information regarding transaction of a particular point of sale, the transaction information TJ is not limited to information regarding transaction at the point of sale and the content of information may vary depending on, for example, the type of voucher.

Furthermore, for example, when the method for controlling the POS system 1 illustrates in FIGs. 4 and 6 is implemented by using the POS terminal 3 and a computer included in the printer 2, or the POS terminal 3 and an external device coupled to the printer 2, the present disclosure may be implemented in the form of a program that is run by a computer to implement the control method, a storage medium storing the program in a computer-readable manner, or a transmission medium that transmits the program. The method for controlling the POS system 1 corresponds to an example of a method for controlling a printing system.

Moreover, the function of the terminal control section 30, the function of the printing apparatus control section 20, and the function of the storage apparatus control section 40 are implemented by using a plurality of processors or a semiconductor chip.

Further, the units illustrated in FIGs. 1 and FIG. 2 are mere an example and the specific application form is not limited to the example. This means that hardware devices are not necessarily provided to correspond to the respective units and a single processor can implement the functions of the units by running a program. In addition, one or more functions implemented by using software in the embodiment described above may be implemented by using hardware; or one or more functions implemented by using hardware may be implemented by using software. Specific configurations of the units of the POS terminal 3, the printer 2, and the TSE memory card 4 can be changed without departing from the scope of the present disclosure.

Furthermore, for example, the step units of operations illustrated in the FIGs. 4 and 6 are determined by division based on the main processing contents for ease of understanding of operations of the units of the POS system 1 and the present disclosure is not limited by the method of division of processing units or the names of the processing units. Depending on the processing contents, the operations may be divided into step units more than the step units in the embodiment. In addition, the division may be performed in a manner in which one step unit includes more processing operations.

## Claims

1. A printing system (1) comprising:
a printing apparatus (2) configured to print on a print medium based on print data;
a terminal apparatus (3) configured to communicate with the printing apparatus; and
a memory card (4) configured to be coupled to the printing apparatus and configured to record information by employing a write once read many (WORM) method, wherein
the terminal apparatus includes a terminal communication section (32) that is configured to communicate with the printing apparatus,
the terminal apparatus is configured to send, via the terminal communication section, transaction information (TJ) regarding a transaction and a control command (KCD) for ordering accessing the memory card,
the printing apparatus includes a printing apparatus communication section (21) that is configured to communicate with the terminal apparatus and a connection section (24) configured to be coupled to the memory card,
the printing apparatus is configured to output the transaction information to the memory card via the connection section in accordance with the control command received via the printing apparatus communication section,
the memory card is configured to generate, in accordance with the transaction information, identification information (TSB) for identifying the transaction information,
the memory card is configured to record the identification information and the transaction information,
the memory card is configured to output the identification information to the printing apparatus via the connection section,
the printing apparatus is configured to send the identification information to the terminal apparatus via the printing apparatus communication section,
the terminal apparatus is configured to generate print data based on the identification information received from the printing apparatus, and
the terminal apparatus is configured to send the generated print data to the printing apparatus via the terminal communication section.

2. The printing system (1) according to claim 1, wherein
when the terminal apparatus (3) receives the identification information (TSB) from the printing apparatus (2) via the terminal communication section (32), the terminal apparatus is configured to send the generated print data, which includes a print command for ordering printing, the transaction information (TJ), and the identification information, via the terminal communication section, and
when the printing apparatus receives the print data via the printing apparatus communication section (21), the printing apparatus is configured to print a voucher including the transaction information and the identification information by using a printing section (22).

3. The printing system (1) according to claim 2, wherein
the printing apparatus (2) is configured to switch between a normal operation state in which the printing apparatus prints in accordance with the print command by using the printing section (22) and an offline state in which the printing apparatus does not perform any operation in accordance with the print command, and
when the printing apparatus in the offline state receives the control command (KCD) via the printing apparatus communication section (21), in accordance with the control command, the printing apparatus is configured to output the transaction information (TJ) to the memory card (4) via the connection section (24) and to send the identification information (TSB) to the terminal apparatus (3) via the printing apparatus communication section.

4. The printing system (1) according to claim 1, wherein
the printing apparatus (2) is configured to generate a recording command for instructing the memory card (4) to record information and is configured to output the recording command and the transaction information (TJ) via the connection section (24) in accordance with the control command (KCD) received via the printing apparatus communication section (21), and
the memory card (4) is configured to generate the identification information (TSB) based on the transaction information and to record the identification information and the transaction information in accordance with the recording command.

5. The printing system (1) according to claim 1, wherein the memory card (4) is configured to generate intermediate data based on the transaction information (TJ), to encrypt the intermediate data by using a secret key associated with a public key, and to record the encrypted intermediate data, the identification information (TSB), and the transaction information that are associated with each other.

6. A method for controlling a printing system (1) including a printing apparatus (2) configured to print on a print medium based on print data, a terminal apparatus (3) configured to communicate with the printing apparatus, and a memory card (4) configured to be coupled to the printing apparatus and configured to record information by employing a write once read many (WORM) method, wherein
the terminal apparatus sends transaction information (TJ) regarding a transaction and a control command (KCD) for ordering accessing the memory card to the printing apparatus,
the printing apparatus outputs the transaction information to the memory card in accordance with the control command,
the memory card generates, in accordance with the transaction information, identification information (TSB) for identifying the transaction information,
the memory card records the identification information and the transaction information,
the memory card outputs the identification information to the printing apparatus,
the printing apparatus sends the identification information to the terminal apparatus,
the terminal apparatus generates print data based on the identification information received from the printing apparatus, and
the terminal apparatus sends the generated print data to the printing apparatus via the terminal communication section.

## Patentansprüche

1. Drucksystem (1), umfassend:
eine Druckvorrichtung (2), die eingerichtet ist, auf einem Druckmedium basierend auf Druckdaten zu drucken;
ein Endgerät (3), das eingerichtet ist, mit der Druckvorrichtung zu kommunizieren; und
eine Speicherkarte (4), die eingerichtet ist, an die Druckvorrichtung gekoppelt zu werden, und eingerichtet ist, Informationen durch Verwenden eines Write Once Read Many (WORM, Schreibe einmal, lese vielfach) Verfahrens aufzuzeichnen, wobei
das Endgerät einen Endgerätkommunikationsabschnitt (32) enthält, der eingerichtet ist, mit der Druckvorrichtung zu kommunizieren,
das Endgerät eingerichtet ist, Transaktionsinformationen (TJ) bezüglich einer Transaktion und einen Steuerbefehl (KCD) zum Anordnen eines Zugriffs auf die Speicherkarte über den Endgerätkommunikationsabschnitt zu senden,
die Druckvorrichtung einen Druckvorrichtungskommunikationsabschnitt (21), der eingerichtet ist, mit dem Endgerät zu kommunizieren, und einen Verbindungsabschnitt (24), der eingerichtet ist, an die Speicherkarte gekoppelt zu sein, enthält,
die Druckvorrichtung eingerichtet ist, die Transaktionsinformationen über den Verbindungsabschnitt in Übereinstimmung mit dem Steuerbefehl an die Speicherkarte auszugeben, der über den Druckvorrichtungskommunikationsabschnitt empfangen wird,
die Speicherkarte eingerichtet ist, in Übereinstimmung mit den Transaktionsinformationen Identifikationsinformationen (TSB) zum Identifizieren der Transaktionsinformationen zu erzeugen,
die Speicherkarte eingerichtet ist, die Identifikationsinformationen und die Transaktionsinformationen aufzuzeichnen,
die Speicherkarte eingerichtet ist, die Identifikationsinformationen über den Verbindungsabschnitt an die Druckvorrichtung auszugeben,
die Druckvorrichtung eingerichtet ist, die Identifikationsinformationen über den Druckvorrichtungskommunikationsabschnitt an das Endgerät zu senden,
das Endgerät eingerichtet ist, Druckdaten basierend auf den Identifikationsinformationen zu erzeugen, die von der Druckvorrichtung empfangen werden, und
das Endgerät eingerichtet ist, die erzeugten Druckdaten über den Endgerätkommunikationsabschnitt an die Druckvorrichtung zu senden.

2. Drucksystem (1) nach Anspruch 1, wobei
wenn das Endgerät (3) die Identifikationsinformationen (TSB) von der Druckvorrichtung (2) über den Endgerätkommunikationsabschnitt (32) empfängt, das Endgerät eingerichtet ist, die erzeugten Druckdaten, die einen Druckbefehl zum Anordnen eines Drucks enthalten, die Transaktionsinformationen (TJ) und die Identifikationsinformationen über den Endgerätkommunikationsabschnitt zu senden, und
wenn die Druckvorrichtung die Druckdaten über den Druckvorrichtungskommunikationsabschnitt (21) empfängt, die Druckvorrichtung eingerichtet ist, einen Beleg, der die Transaktionsinformationen und die Identifikationsinformationen enthält, unter Verwendung eines Druckabschnitts (22) zu drucken.

3. Drucksystem (1) nach Anspruch 2, wobei
die Druckvorrichtung (2) eingerichtet ist, zwischen einem normalen Betriebszustand, in dem die Druckvorrichtung in Übereinstimmung mit dem Druckbefehl unter Verwendung des Druckabschnitts (22) druckt, und einem Offline-Zustand, in dem die Druckvorrichtung keinen Betrieb in Übereinstimmung mit dem Druckbefehl ausführt, umzuschalten, und
wenn die Druckvorrichtung im Offline-Zustand den Steuerbefehl (KCD) über den Druckvorrichtungskommunikationsabschnitt (21) in Übereinstimmung mit dem Druckbefehl empfängt, die Druckvorrichtung eingerichtet ist, die Transaktionsinformationen (TJ) über den Verbindungsabschnitt (24) an die Speicherkarte (4) auszugeben und die Identifikationsinformationen (TSB) über den Druckvorrichtungskommunikationsabschnitt an das Endgerät (3) zu senden.

4. Drucksystem (1) nach Anspruch 1, wobei
die Druckvorrichtung (2) eingerichtet ist, einen Aufzeichnungsbefehl zum Anweisen der Speicherkarte (4) Informationen aufzuzeichnen, zu erzeugen, und eingerichtet ist, den Aufzeichnungsbefehl und die Transaktionsinformationen (TJ) über den Verbindungsabschnitt (24) in Übereinstimmung mit dem Druckbefehl (KCD) auszugeben, der über den Druckvorrichtungskommunikationsabschnitt (21) empfangen wird, und
die Speicherkarte (4) eingerichtet ist, die Identifikationsinformationen (TSB) basierend auf den Transaktionsinformationen zu erzeugen und die Identifikationsinformationen und die Transaktionsinformationen in Übereinstimmung mit dem Aufzeichnungsbefehl aufzuzeichnen.

5. Drucksystem (1) nach Anspruch 1, wobei die Speicherkarte (4) eingerichtet ist, Zwischendaten basierend auf den Transaktionsinformationen (TJ) zu erzeugen, die Zwischendaten unter Verwendung eines geheimen Schlüssels zu entschlüsseln, der einem öffentlichen Schlüssel zugeordnet ist, und die verschlüsselten Zwischendaten, die Identifikationsinformationen (TSB) und die Transaktionsinformationen, die einander zugeordnet sind, aufzuzeichnen.

6. Verfahren zum Steuern eines Drucksystems (1), das eine Druckvorrichtung (2), die eingerichtet ist, auf einem Druckmedium basierend auf Druckdaten zu drucken, ein Endgerät (3), das eingerichtet ist, mit der Druckvorrichtung zu kommunizieren; und eine Speicherkarte (4), die eingerichtet ist, an die Druckvorrichtung gekoppelt zu werden, und eingerichtet ist, Informationen durch Verwenden eines Write Once Read Many (WORM) Verfahrens aufzuzeichnen, enthält, wobei
das Endgerät Transaktionsinformationen (TJ) bezüglich einer Transaktion und einen Steuerbefehl (KCD) zum Anordnen eines Zugriffs auf die Speicherkarte an die Druckvorrichtung sendet,
die Druckvorrichtung die Transaktionsinformationen an die Speicherkarte in Übereinstimmung mit dem Steuerbefehl ausgibt,
die Speicherkarte in Übereinstimmung mit den Transaktionsinformationen Identifikationsinformationen (TSB) zum Identifizieren der Transaktionsinformationen erzeugt,
die Speicherkarte die Identifikationsinformationen und die Transaktionsinformationen aufzeichnet,
die Speicherkarte die Identifikationsinformationen an die Druckvorrichtung ausgibt,
die Druckvorrichtung die Identifikationsinformationen an das Endgerät sendet,
das Endgerät Druckdaten basierend auf den Identifikationsinformationen erzeugt, die von der definiert ist empfangen werden, und
das Endgerät die erzeugten Druckdaten über den Endgerätkommunikationsabschnitt an die Druckvorrichtung sendet.

## Revendications

1. Système d'impression (1) comprenant :
un appareil d'impression (2) configuré pour imprimer sur un support d'impression à partir de données d'impression ;
un appareil terminal (3) configuré pour communiquer avec l'appareil d'impression ; et
une carte mémoire (4) configurée pour être couplée à l'appareil d'impression et configurée pour l'enregistrement d'informations à l'aide d'un procédé d'écriture unique et de lectures multiples (WORM), dans lequel
l'appareil terminal inclut une section de communication de terminal (32) configurée pour communiquer avec l'appareil d'impression,
l'appareil terminal est configuré pour envoyer, par le biais de la section de communication de terminal, des informations de transaction (TJ) concernant une transaction et une commande de contrôle (KCD) pour la commande d'un accès à la carte mémoire,
l'appareil d'impression inclut une section de communication d'appareil d'impression (21) configurée pour communiquer avec l'appareil terminal et une section de connexion (24) configurée pour être couplée à la carte mémoire,
l'appareil d'impression est configuré pour envoyer les informations de transaction à la carte mémoire par le biais de la section de connexion en fonction de la commande de contrôle reçue par le biais de la section de communication d'appareil d'impression,
la carte mémoire est configurée pour générer, en fonction des informations de transaction, des informations d'identification (TSB) pour l'identification des informations de transaction,
la carte mémoire est configurée pour enregistrer les informations d'identification et les informations de transaction,
la carte mémoire est configurée pour envoyer les informations d'identification à l'appareil d'impression par le biais de la section de connexion,
l'appareil d'impression est configuré pour envoyer les informations d'identification à l'appareil terminal par le biais de la section de communication d'appareil d'impression,
l'appareil terminal est configuré pour générer des données d'impression basées sur les informations d'identification reçues à partir de l'appareil d'impression, et
l'appareil terminal est configuré pour envoyer les données d'impression générées à l'appareil d'impression par le biais de la section de communication de terminal.

2. Système d'impression (1) selon la revendication 1, dans lequel
lorsque l'appareil terminal (3) reçoit les informations d'identification (TSB) en provenance de l'appareil d'impression (2) par le biais de la section de communication de terminal (32), l'appareil terminal est configuré pour envoyer les données d'impression générées, lesquelles incluent une commande d'impression pour la commande de l'impression, les informations de transaction (TJ) et les informations d'identification, par le biais de la section de communication de terminal, et
lorsque l'appareil d'impression reçoit les données d'impression par le biais de la section de communication d'appareil d'impression (21), l'appareil d'impression est configuré pour imprimer un coupon incluant les informations de transaction et les informations d'identification à l'aide d'une section d'impression (22) .

3. Système d'impression (1) selon la revendication 2, dans lequel
l'appareil d'impression (2) est configuré pour commuter entre un état de fonctionnement normal dans lequel l'appareil d'impression imprime en fonction de la commande d'impression à l'aide de la section d'impression (22) et un état hors ligne dans lequel l'appareil d'impression n'exécute aucune opération en fonction de la commande d'impression, et
lorsque l'appareil d'impression dans l'état hors ligne reçoit la commande de contrôle (KCD) par le biais de la section de communication d'appareil d'impression (21), en fonction de la commande de contrôle, l'appareil d'impression est configuré pour envoyer les informations de transaction (TJ) à la carte mémoire (4) par le biais de la section de connexion (24) et pour envoyer les informations d'identification (TSB) à l'appareil terminal (3) par le biais de la section de communication d'appareil d'impression.

4. Système d'impression (1) selon la revendication 1, dans lequel
l'appareil d'impression (2) est configuré pour générer une commande d'enregistrement pour indiquer à la carte mémoire (4) d'enregistrer des informations et configuré pour envoyer la commande d'enregistrement et les informations de transaction (TJ) par le biais de la section de connexion (24) en fonction de la commande de contrôle (KCD) reçue par le biais de la section de communication d'appareil d'impression (21), et
la carte mémoire (4) est configurée pour générer les informations d'identification (TSB) sur la base des informations de transaction et pour enregistrer les informations d'identification et les informations de transaction en fonction de la commande d'enregistrement.

5. Système d'impression (1) selon la revendication 1, dans lequel la carte mémoire (4) est configurée pour générer des données intermédiaires sur la base des informations de transaction (TJ), pour chiffrer les données intermédiaires à l'aide d'une clé secrète associée à une clé publique, et pour enregistrer les données intermédiaires chiffrées, les informations d'identification (TSB) et les informations de transaction associées les unes aux autres.

6. Procédé de commande d'un système d'impression (1) incluant un appareil d'impression (2) configuré pour imprimer sur un support d'impression à partir de données d'impression, un appareil terminal (3) configuré pour communiquer avec l'appareil d'impression, et une carte mémoire (4) configurée pour être couplée à l'appareil d'impression et configurée pour l'enregistrement d'informations à l'aide d'un procédé d'écriture unique et de lectures multiples (WORM), dans lequel
l'appareil terminal envoie des informations de transaction (TJ) concernant une transaction et une commande de contrôle (KCD) pour la commande d'un accès à la carte mémoire à l'appareil d'impression,
l'appareil d'impression envoie les informations de transaction à la carte mémoire en fonction de la commande de contrôle,
la carte mémoire génère, en fonction des informations de transaction, des informations d'identification (TSB) pour l'identification des informations de transaction,
la carte mémoire enregistre les informations d'identification et les informations de transaction,
la carte mémoire envoie les informations d'identification à l'appareil d'impression,
l'appareil d'impression envoie les informations d'identification à l'appareil terminal,
l'appareil terminal génère des données d'impression basées sur les informations d'identification reçues à partir de l'appareil d'impression, et
l'appareil terminal envoie les données d'impression générées à l'appareil d'impression par le biais de la section de communication de terminal.
